Europäisches Patentamt

(19) European Patent Office

Office européen des brevets

(11) Numéro de publication: **0 030 200**
**B1**

(12) **FASCICULE DE BREVET EUROPEEN**

(45) Date de publication du fascicule du brevet:
**08.10.86**

(21) Numéro de dépôt: **80401729.1**

(22) Date de dépôt: **03.12.80**

(51) Int. Cl.⁴: **B 01 D 3/00,** B 01 D 3/34,
B 01 D 3/42, B 01 D 19/02,
B 01 D 3/08

(54) **Installation de régénération de solvants usés et utilisation de ladite installation.**

(30) Priorité: **03.12.79 FR 7930264**

(43) Date de publication de la demande:
**10.06.81 Bulletin 81/23**

(45) Mention de la délivrance du brevet:
**08.10.86 Bulletin 86/41**

(84) Etats contractants désignés:
**AT BE CH DE FR GB IT LI LU NL SE**

(56) Documents cités:
**CH - A - 351 945**
**DE - A - 2 051 526**
**DE - C - 325 799**
**DE - C - 836 795**
**FR - A - 709 534**
**FR - A - 907 418**
**US - A - 1 420 642**
**US - A - 2 949 408**
**US - A - 3 515 199**
**US - A - 3 766 017**
**US - A - 3 825 491**

(73) Titulaire: **Caillierez, François, 61 bis, avenue de Verdun,
F-59700 Marcq en Baroeul (FR)**
Titulaire: **LOTIGIE S.A., 445 Boulevard Gambetta,
F-59200 Tourcoing (FR)**

(72) Inventeur: **Caillierez, François, 61 bis avenue de Verdun,
F-59700 Marcq en Baroeul (FR)**

(74) Mandataire: **Wagret, Jean-Michel, Propi Conseils 23 rue
de Léningrad, F-75008 Paris (FR)**

# Description

Domaine technique.

La présente invention concerne une installation de régénération de solvants usés par distillation à températures et pressions variables à l'aide d'un évaporateur chauffé par fluide caloporteur et avec un dispositif de réglage de la température, de la pression, ainsi qu'avec des colonnes réfrigérantes verticales et inclinées vers le bas. Elle concerne aussi l'utilisation de ladite installation en vue de la régénération de solvants usés.

Problème posé.

La régénération des solvants usés est un problème posé dans le cadre des économies d'énergie, de matières premières et d'élimination de déchets permettant leur récupération.

Les solvants usés proviennent d'utilisations diverses, d'une part, chez les fabricants, d'autre part, chez les utilisateurs de produits industriels divers, à savoir dans les industries:

– des peintures et encres; chez les producteurs (nettoyage des appareils de fabrication), chez les utilisateurs (nettoyage des appareils d'application);
– des plastiques, résines et vernis, caoutchouc, cuirs, colles et adhésifs,
   – pharmaceutique, parfumerie,
   – phytosanitaire,
   – mécanique pour le dégraissage,
   – textile,
   – pétrolière,
   – des corps gras, pour l'extraction, ou autre...

Les solvants usés peuvent contenir, outre les solvants mis en œuvre initialement:

– de l'eau comportant éventuellement des matières solubles (solides ou liquides à l'état naturel) ou des matières en émulsion (corps gras par exemple).
   – d'autres solvants,
   – des composés résineux plus ou moins polymérisables,
   – des corps gras d'origine minérale ou végétale,
   – des matières solides en suspension ou en solution, (ex. pigments de peinture, organiques ou minéraux métalliques).
   – des composés chimiques, solides ou liquides (réactants ou adjuvants) par exemple de l'anhydride phtalique, de l'acide maléïque, du glycérol, etc... pour les solvants provenant d'un procédé chimique ou physique.

Etat de la technique antérieure et inconvénients.

La régénération des solvants usés se pratique généralement par distillation.

Celle-ci s'opère

soit par procédé direct avec mise en ébullition sous pression atmosphérique ou réduite,

soit par procédé dit azéotropique procédant par entraînement mécanique des vapeurs de solvant à l'aide de vapeur d'eau injectée dans le solvant usé.

Les rendements en solvant régénéré varient sensiblement selon les procédés.

En effet, le rendement dépend surtout de l'extraction de la partie retenue dans les résidus.

La distillation est généralement arrêtée avant épuisement du résidu de manière à maintenir le résidu liquide et à viscosité suffisamment faible pour en permettre la vidange, soit par gravité, soit par pompe.

Dans l'industrie des peintures, la présence de peinture séchée insoluble, sous forme de peaux, en lambeaux dans le solvant sale, avant régénération et la polymérisation des résines sur les parois d'échange, obligent à maintenir une part importante de solvant non récupéré dans le résidu, de manière à le maintenir à l'état liquide et en permettre son extraction, ce qui provoque une perte de produit.

D'autre part, la proportion de liquides à vapeurs inflammables résiduelle n'autorise pas le rejet aux décharges publiques.

La présence de matières chimiques solubles ou émulsionnables ou non biodégradables oblige à confier ces résidus à des usines de destruction par incinération, agréées par le service des Etablissements classés, moyennant paiement.

Par ailleurs, la transmission de chaleur aux produits à traiter pose des problèmes. En effet, les matières solides inertes peuvent sédimenter sur les parois d'échange et freiner, voire empêcher l'échange thermique. Les composés résineux polymérisables peuvent se polymériser sur les parois formant un véritable revêtement avec les autres composés solides, qui par accumulation et par inertie, empêche l'échange thermique.

La polymérisation de certains produits contenus dans les solvants a généralement lieu avant d'atteindre la température d'ébullition finale, les résines employées ayant des températures de polymérisation de plus en plus basses et des temps de polymérisation de plus en plus courts.

Il peut résulter également une polymérisation en raison de la durée de l'opération. La quantité de solvant résiduelle doit être maintenue importante dans ces cas pour obtenir l'écoulement du résidu.

L'élévation de température engendre une décomposition des composés résineux soit par cracking, soit par oxydation ou encore par réaction chimique. Il se produit généralement des émissions de vapeurs irritantes condensables ou incondensables lesquelles peuvent altérer la couleur ou l'odeur du solvant régénéré, voire acidifier celui-ci. En outre les phénomènes de polymérisation entraînent obligation de récurer les parois d'échange après chaque opération ce qui n'est pas sans difficultés. Certains composés peuvent être plus ou moins calcinés sur les parois et les produits adhérents peuvent encore contenir des vapeurs inflammables susceptibles de provoquer des explosions lors d'emploi d'outils mécaniques pour procéder au nettoyage.

On a pensé alors utiliser des produits de décapage mais ils ne règlent pas le problème, les produits polymérisés étant généralement insolubles, voire infusibles, insaponifiables, donc inertes aux traitements chimiques.

Dans le procédé azéotropique, la température
limitée à 100°C au stade final ne résoud pas le
problème de manière satisfaisante.

En effet, la polymérisation des résines peut
avoir lieu dans la masse. Les composés résiduels
après extraction des solvants en tout ou partie,
passent de l'état liquide à solide (ou prennent une
consistance élevée) si l'on n'a pas atteint la température de fusion et vont former à l'intérieur du
corps de traitement un magma spongieux adhérent aux parois.

L'extraction ne sera possible que par solubilisation, ce qui n'est généralement pas possible avec
les produits polymérisés.

D'autre part, les résidus présentent généralement une forte rétention de solvant en raison de
la viscosité élevée ou de floculation du résidu par
l'eau condensée présente. L'extraction totale du
solvant est généralement impossible.

Dans ce procédé, s'il y a présence de solvants
miscibles à l'eau tels les alcools, les cétones, les
esters, les glycols, etc..., il y a formation d'azéotropes dans le distillat avec ou sans séparation en
deux phases liquides.

Pour les solvants totalement miscibles, il n'y a
qu'une phase. Pour les autres, il y a deux phases
dont le titre en eau varie selon la température
d'ébullition et la chaleur de vaporisation, qui ont
engendré une quantité de vapeur d'autant plus
grande que celles-ci sont élevées.

Lorsqu'il y a séparation en deux phases, il peut
y avoir dissolution de l'eau dans les deux parties:
    – l'une généralement riche en solvant,
    – l'autre généralement pauvre en solvant.

Dans ce cas, la phase riche perd de son pouvoir
solvant, donc nettoyant par perte de solvants solubles à l'eau qui sont généralement ceux à pouvoir
solvant fort et du prix le plus élevé.

La phase pauvre qui n'est pas constituée que
par de l'eau et contient des solvants à forte odeur
et goût ne peut ni être recyclée en raison de sa
concentration en solvant miscible, ni être rejetée
à l'égout ou en décharge en raison de son aspect
polluant.

Le coût de rectification en raison du coût de plus
en plus élevé de la calorie rend celle-ci inapplicable.

D'autre part, ce procédé requiert beaucoup plus
d'énergie que le procédé et le dispositif objet du
présent brevet comme on le verra ci-après.

La quantité de calories nécessaire pour vaporiser un kg d'eau est de l'ordre de 550 calories
(550 × 4.184 J).

La chaleur nécessaire pour distiller un solvant
par chauffage direct est de l'ordre de 80 à 250
calories par kg (80 × 4.184 à 250 × 4.184 J). Ce
procédé azéotropique nécessite de 200 à 1000
calories par kg (200 × 4.184 à 1000 × 4.184 J).
D'autre part, la quantité d'eau entraînée sous
forme de vapeur doit être recondensée et nécessite à nouveau 550 calories (550 × 4.184 J) par kg
d'eau en équivalent eau de refroidissement ce qui représente une consommation d'énergie supplémentaire.

Enfin le résidu contenant d'autant plus d'eau
qu'il aura fallu de vapeur pour épuiser le solvant
et que le résidu est visqueux il faudra dépenser
beaucoup d'énergie pour éliminer les déchets et
le distillat pauvre en solvant. On en pourra extraire et nettoyer les parois que par une intervention manuelle à l'aide de moyens mécaniques.

Dans le procédé décrit, la mise sous vide profond durant la distillation, moyen qui abaisse sensiblement les températures d'ébullition et pourrait
obvier à la polymérisation et à la consommation
d'énergie, entraîne généralement la formation
brutale de mousses entraînant les composés solides dans le distillat qui se trouve pollué à nouveau
par ceux-ci obligeant à un nouveau traitement, ce
qui rend difficile ce procédé. D'autre part, l'abaissement important des températures de distillation
par un vide poussé conduit à des résidus pâteux
ou solides par abaissement de la température,
généralement en dessous des seuils de fusion.

Le brevet allemand no 325 799 décrit un évaporateur à l'air libre pour évaporer l'eau contenue
dans des émulsions d'huile et cet évaporateur est
muni d'un agitateur à bras garni de chaînes pendantes et raclant le fond de l'appareil.

On connaît par le brevet US-3 515 199 un appareil pour concentrer en continu des solutions et
suspensions à base d'eau et comportant une cuve
chauffée d'une part à sa base et d'autre part par
des sources de rayonnement infrarouge supérieures, la cuve comportant un agitateur à guirlandes de chaînes raclant le fond de la cuve.

Le brevet US 3 825 491 décrit un appareil pour
la distillation de l'eau et ne comportant par conséquent pas de dispositif d'agitation.

On connaît par le brevet français 709 534 un
dispositif pour introduire dans une chambre
d'évaporation des solutions salines et dans lequel
la conduite amenant la solution plonge au-
dessous de la surface du liquide.

Enfin le brevet français 907 418 décrit un appareil pour la concentration de solution et constitué
d'un récipient chauffé par chemise d'eau le contenu étant soumis à l'action d'un agitateur mécanique en présence d'une injection gazeuse.

Exposé de l'invention.

L'invention vise à permettre de façon précise la
récupération par distillation de solvants usagers
et à cet effet l'invention concerne une installation
de régénération de solvants usés, du type comportant un évaporateur chauffé et refroidi par
fluide caloporteur avec dispositif de réglage de la
température et de la pression, comprenant la
combinaison des éléments suivants:

a) une paroi d'échange thermique alimentée
par le fluide caloporteur, paroi de forme conique
dirigée pointe en bas et disposée au moins à la
partie inférieure de l'évaporateur;

b) un agitateur à vitesse variable et à deux sens
de rotation, ledit agitateur étant disposé dans
l'évaporateur et étant équipé de bras porteurs de
guirlandes de chaînes dont les maillons sont prévus avec des arêtes tranchantes à angles aigus et réalisées en métal anti-étincelle, lesdites chaînes étant suspendues à deux bras adjacents de l'agitateur 6 et à des hauteurs différentes en étant convergentes vers le centre du fond de l'évaporateur et en permettant ainsi un mouvement de force centripète aux produits pour un sens de rotation de l'agitateur;

c) un circuit de condensation réalisé par des colonnes réfrigérantes;

d) un dispositif brise-mousse, notamment du type peigne disposé dans l'évaporateur;

e) un dispositif d'injection de gaz dans l'évaporateur avec réservoir de recyclage des gaz;

f) un dispositif d'injection du solvant usé à traiter au sein de la masse liquide, par passage dans un échangeur, tel qu'un serpentin plongé dans ladite masse liquide et dont le niveau est stabilisé par régulateur.

De préférence, l'agitateur est constitué d'une pluralité de bras supportant les guirlandes de chaînes, les chaînes étant suspendues en haut à un bras et en bas au bras adjacent, les chaînes comportant des anneaux additionnels passés dans les maillons des chaînes et le fond de l'évaporateur comporte une trappe d'évacuation.

De préférence encore, l'évaporateur est associé à un circuit de condensation constitué de colonnes réfrigérantes sensiblement verticales d'une part et de colonnes inclinées vers le bas d'autre part et en outre il comporte un circuit d'évacuation des gaz.

Le dispositif brise-mousse peut être constitué d'un bras horizontal calé en haut de l'arbre de commande de l'agitateur et auquel sont suspendues des tiges verticales.

De préférence le dispositif de régulation de la température de chauffage et d'évacuation est asservi à un dispositif de contrôle du débit du liquide condensé.

Enfin l'installation peut comporter un dispositif d'asservissement de la température de chauffage au débit du liquide condensé et ce dispositif est constitué d'un flotteur à pointeau sensible au débit du liquide condensé; ledit flotteur étant apte à commander par une vanne proportionnelle la pression d'air comprimé sur un circuit aboutissant à une vanne micrométrique commandant le circuit de fluide chauffant et apte à réguler le débit et la température du fluide caloporteur desservant l'évaporateur.

L'invention concerne encore l'utilisation d'une installation telle que précédemment spécifiée et caractérisée par la succession des opérations suivantes:

a) on introduit le solvant usé dans l'évaporateur chauffé, sous ambiance de gaz inerte;

b) on complète l'alimentation du solvant à traiter avec pré-chauffage par passage du solvant introduit dans un circuit d'alimentation immergé dans la masse du solvant en cours de traitement;

c) on procède au nettoyage des parois d'échange de l'évaporateur par raclage au moyen des chaînes avec modifications successives de la vitesse de rotation de l'agitateur et inversion alternée des sens de rotation;

d) on poursuit la distillation des solvants dans des conditions de température, pression et débit convenable et adaptées à la nature des solvants et de leurs résidus de façon à éviter leur décomposition, les vapeurs étant condensées et recueillies à la sortie des colonnes d'échange;

e) on procède à la dessication du résidu sous vide, les vapeurs émises dans cette phase finale étant recueillies par un circuit séparé;

f) on procède à l'extraction du résidu sec par la trappe d'évacuation située à la base de l'évaporateur par rotation inversée de l'agitateur à chaînes.

Enfin dans le cadre de l'utilisation de l'installation comme précédemment spécifiée, on procède avantageusement, lors de la face finale de dessication sous vide, à l'introduction dans l'évaporateur de produits d'addition aptes à modifier l'état physique du résidu pour en faciliter l'extraction, ces produits d'addition étant choisis parmi les produits comportant les charges minérales sous forme de poudre à fort pouvoir absorbant tel que l'argile, les bentonites, les silices microscopiques, et les résines polymérisables aptes à solidifier et enrober le résidu solide.

L'installation et l'utilisation de l'invention permettent d'obtenir:

– d'une part, des solvants régénérés de bonne qualité,

– d'autre part, des résidus solides, insolubles à l'eau, non polluants,

– enfin, un rendement optimal en solvant régénéré.

La régénération des solvants est obtenue avec un rendement optimum permettant d'obtenir le maximum de solvants régénérés et d'éliminer de manière efficace les déchets, deux conditions qui sont exigées par les conditions économiques actuelles.

En effet, il n'est plus nécessaire d'arrêter la distillation en maintenant une certaine proportion de résidus liquides: les résidus solides sont éliminés pratiquement secs.

Il faut observer, du point de vue écologique, que les résidus polymérisés, voire carbonisés donc solidifiés, peuvent être rejetés aux décharges publiques dans la mesure où ils répondent de manière positive aux tests de lixiviation (contrôle de l'insolubilité à l'eau). En effet, en polymérisant les résines liquides qui imprègnent les composés chimiques solubles, on rend celles-ci insolubles à l'eau, et par conséquence, les composés solubles de même manière que cela se produit dans les feuilles de peinture après séchage.

Ces résidus peuvent encore être utilisés comme combustible solide; ils peuvent encore être recyclés dans certains produits: mastics étanchéité, peinture de marquage, utilisation comme scories etc...

L'invention sera mieux comprise à l'aide de la description ci-après qui en donne quelques exemples non limitatifs de réalisation pratique et qui sont illustrés par les dessins joints.

Brève description des figures.

Dans ces dessins:

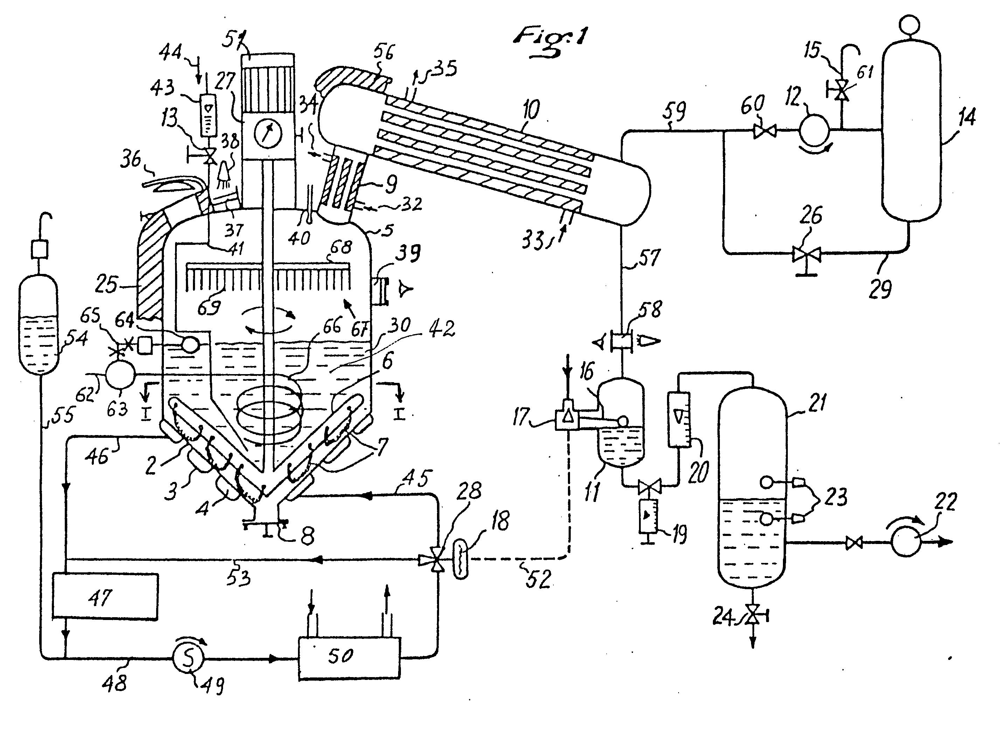

La figure 1 est un schéma synoptique d'ensemble de l'installation.

La figure 2 est une coupe horizontale schématique de l'évaporateur suivant I–I de la figure 1.

La figure 3 est une vue en perspective d'une première version d'un anneau de chaîne coupé suivant un plan perpendiculaire à son grand axe.

La figure 4 est une vue en perspective d'une deuxième version d'un anneau de chaîne coupé suivant le plan perpendiculaire au grand axe.

La figure 5 est une demi-coupe verticale de la partie inférieure de l'évaporateur lorsque l'agitateur tourne à grande vitesse et,

la figure 6 est une demi-coupe verticale de la partie inférieure de l'évaporateur lorsque l'agitateur tourne à faible vitesse ou est arrêté.

Description de quelques modes de réalisation.

L'évaporateur (1) a un fond (2) chauffé ou refroidi à l'aide d'une double paroi ou jaquette (3) dans laquelle circule à bonne vitesse un fluide caloporteur (4) capable d'atteindre des températures élevées (de l'ordre de 350 °C). Le fond comporte une trappe de vidange (8).

L'évaporateur est à jupe (30) cylindrique, à toit (5) de forme élliptique. Le fond (2) est de forme conique de révolution à pointe en bas de manière à faciliter l'écoulement des résidus et à conférer une proportionnalité constante de surface d'échange au volume de matière chauffée. En effet, le rapport $\frac{V}{S}$ du cône est proportionnel à $\frac{R}{3}$ si R est le rayon de la base.

L'évaporateur est équipé en son axe vertical d'un agitateur spécial (6).

L'agitateur (6) a des bras ayant une forme épousant celle des parois de la partie inférieure.

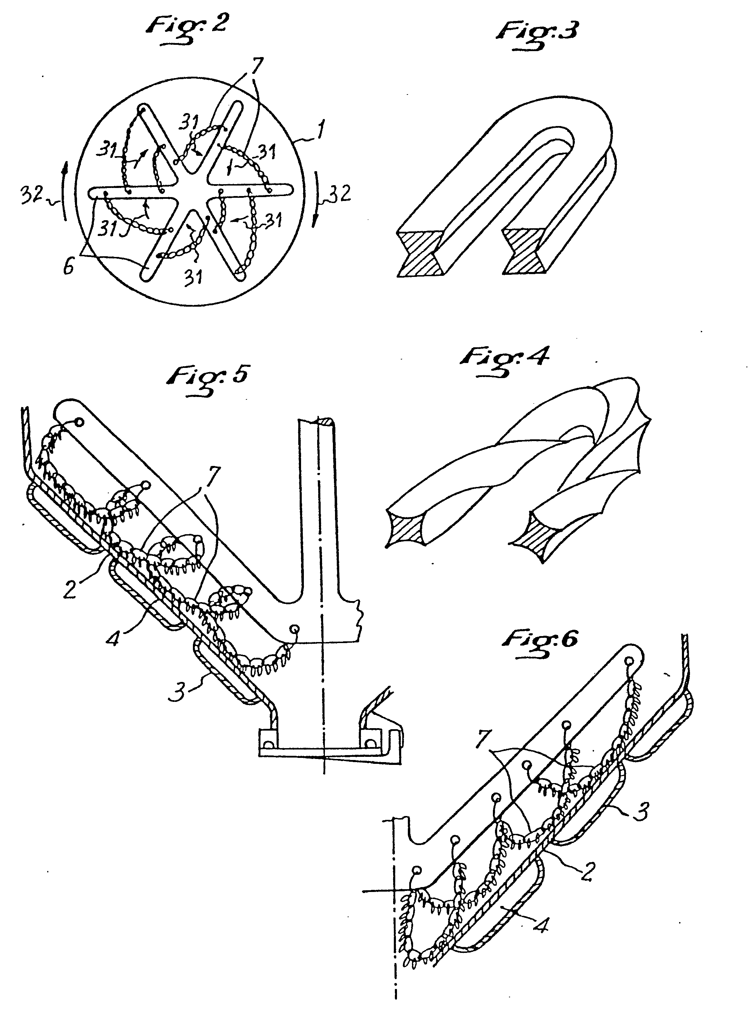

Il comporte plusieurs ensembles de chaînes à arêtes tranchantes (7) réalisées en métal non susceptible de former des étincelles soit par chocs entre elles-mêmes soit avec la paroi (2) soit avec des corps étrangers métalliques et d'une dureté inférieure à celle des parois de manière à réduire l'usure de celles-ci. Les maillons de ces chaînes sont représentés aux figures 3 et 4 où on voit qu'on les réalise à section polygonale et même polygonale et torsadée (figure 4). Elles forment des guirlandes dans les anneaux desquelles on passe d'autres anneaux à même section, comme les clefs d'un trousseau passant dans un anneau.

Les éléments de chaîne (7) suspendus à l'agitateur (6) sont placés de manière à pousser les résidus solides vers le centre du fond où se trouve une vanne de vidange dans un sens de rotation.

Les chaînes suspendues (7) peuvent avantageusement être placées en forme de secteurs conférant ainsi un mouvement de force centripète aux produits (flèches 31) quand l'agitateur tourne dans le sens des flèches (32).

Pour cela on les attache à deux bras adjacents de l'agitateur (6) à des hauteurs différentes (figures 2, 5, 6).

Le moyen pour abattre les mousses est un peigne (67) brise-mousse constitué d'un bras horizontal (68) calé en haut de l'arbre de commande de l'agitateur auquel sont suspendues des tiges verticales (69).

L'évaporateur (1) comporte encore une trappe de remplissage (36), un hublot (37) avec un projecteur (38) combiné avec un hublot d'observation (39). Il est calorifugé par un isolant (25). La température est contrôlée par un thermomètre (40). L'agitateur (6) est entraîné en rotation par un moteur (51) et un variateur (27). Il est prévu un tube (41) d'injection de gaz inerte (44) au sein du liquide (42) contenu dans l'évaporateur (1). La quantité de gaz est réglée par la vanne (13) et contrôlée par le débitmètre (43).

Le fluide caloporteur est amené dans la double paroi (3) par la conduite (45). Il en ressort par la conduite (46) pour être réchauffé par la chaudière (47) qui le renvoie par la conduite (48) vers la conduite (45) en passant par la pompe de circulation (49), le réfrigérant (50) (qui fonctionne occasionnellement) et la vanne à trois voies (28) qui peut diriger le fluide vers le by-pass (53) suivant l'action du dispositif de pilotage (18) micrométrique qui est relié à la vanne pneumatique proportionnelle (17) par la conduite (52) comme on le verra plus loin.

Il est prévu un vase d'expansion (54) relié au circuit de chauffage par la conduite (55).

L'appareillage comprend encore des cloisons de réfrigération et condensation de vapeur soit verticales (9) pour concentration en vue de distillation fractionnée des solvants, soit inclinée (10) vers la sortie pour la condensation des vapeurs en phase liquide par refroidissement à l'eau ou à l'air. L'eau froide entre en (32) et (33) et ressort en (34) et (35). La colonne (10) est isolée en (56).

Un receveur (11) destiné à recueillir le distillat reçoit celui-ci par la conduite (57). Un voyant (58) est prévu sur cette conduite (57).

L'ensemble de l'installation peut être mis sous pression réduite à l'aide d'une pompe à vide (12), de préférence à membrane pour les produits agressifs, qui est reliée à la colonne (10) par la conduite (59) comportant une vanne (60).

L'ensemble de l'installation peut être mis sous gaz inerte (flèche 44) pour éliminer les risques d'inflammation tant des vapeurs inflammables que des résidus solides au cours du traitement. Ce gaz est introduit par ouverture de la vanne (13) et mesuré par le débitmètre (43).

Un tel équipement permet de réaliser les distillations sous pression atmosphérique ou réduite.

On peut également procéder à la distillation directe par ébullition à pression atmosphérique, sous atmosphère de gaz inerte.

Lorsque l'on arrive à l'épuisement de la distillation, on peut mettre l'installation sous pression réduite et soit élever la température de manière à polymériser et carboniser les résidus de manière à les rendre solides et insolubles (de 150 à 300 °C et plus) soit à les solidifier en abaissant la température au-dessous du point de fusion.

Durant cette phase, les gaz extraits de l'installation par la pompe à vide sont avantageusement comprimés dans un réservoir de stockage (14).

Le vide assure l'extraction quasi totale des composés volatils. Ceux-ci sont soit condensés et recueillis dans le receveur (11) ou un autre receveur séparément non représenté, soit rejetés à l'atmosphère s'ils sont incondensables ($CO_2$ etc...) à l'aide d'un évent (15) et de la vanne (61) soit condensés par un piège frigorifique, soit solubilisés dans l'eau dans un autre piège, soit encore absorbés sur un piège à matière absorbante, ceci pour éliminer ou diminuer l'odeur polluante.

Le solvant recueille dans la phase de distillation initiale jusqu'à épuisement observé par l'arrêt de la condensation liquide ou avant une température qui correspond à une dégradation soit des solvants eux-mêmes soit des autres composés est recueilli et éventuellement remélangé pour servir à nouveau.

Dans le cas où il se produit des composés dégradant celui-ci soit par la couleur, soit par l'acidification ou encore par la dissolution de matières impropres non facilement séparables, on recueille la fraction séparée, généralement mélangée à celle qui proviendra encore dans la phase finale opérée sous vide optimal. Cette phase généralement très réduite voire inexistante dans certains cas peut être recyclée dans l'opération suivante ou éliminée par incinération.

Dans certains cas par recyclage on obtient soit une polymérisation des résidus indésirables, soit un cracking produisant des gaz incondensables ou condensables qui se trouvent séparés dans les pièges.

L'agitateur à chaîne (6) provoque le décollement des résidus solides au fur et à mesure de leur formation et le broyage de ceux-ci dans la partie inférieure.

Après retour en pression atmosphérique, de préférence sous atmosphère inerte de manière à éviter l'inflammation des résidus solides, ceux-ci sont extraits par la vanne de vidange (8) et par l'agitateur (6) dont la vitesse peut être élevée ou réduite à l'aide d'un variateur (27) de la vitesse et l'inversement du sens de marche de l'agitateur (6).

Après épuisement de la vidange et fermeture de la vanne, on peut introduire une nouvelle charge de produit à traiter généralement très fluide.

On vient de décrire un fonctionnement discontinu de l'appareil.

On peut en prévoir un fonctionnement continu par admission de solvant usé au moyen de la conduite (62) et de la pompe (63) dont le débit est régulé par un détecteur de niveau (64) relié à la pompe (63) par un conducteur (65).

La conduite de refoulement (66) entoure en serpentin l'axe de l'agitateur (6) pour déboucher à la base de l'évaporateur (1).

L'agitateur porté à différentes vitesses de la plage de variation dans les deux sens d'agitation procède alors au nettoyage des parois.

Les chaînes produisent tantôt des balayages centrifuges, tantôt des effets centripètes suivant leur sens de rotation balayent les parois d'échange encrassées.

Après retour à vitesse normale de l'agitateur (6) les résidus demeurent en suspension.

On peut procéder à une nouvelle opération de distillation, les parois d'échange nettoyées autorisant à nouveau le transfert de chaleur dans de bonnes conditions.

Une autre particularité du procédé consiste à réguler la puissance de chauffe à l'aide d'un contrôle du débit de distillat au lieu de le faire à l'aide de la température du distillat.

Ce contrôle est avantageusement réalisé à l'aide d'un flotteur à pointeau (16) dans le receveur (11) qui commande une pression d'air comprimé variable sur la vanne pneumatique proportionnelle (17) et la conduite (52) aboutissant à la vanne micrométrique (18) du circuit de fluide chauffant.

Cette vanne micrométrique (18) permet le réglage du débit de liquide distillé à l'aide du débitmètre (19) en agissant sur le débit et la température du fluide caloporteur dans la conduite (45).

Lorsque le niveau s'élève au-dessus du niveau normal dans le receveur (11), c'est que le débit est trop élevé, en conséquence le pointeau du flotteur (16) réduit la pression d'air dans la conduite (52) qui provoque la fermeture de la vanne de chauffage (28).

Inversement lorsque le niveau s'abaisse au-dessous du niveau normal, le pointeau du flotteur (16) provoque l'ouverture de la vanne de chauffage (28) rétablissant le débit de condensation de liquide.

Dans certains cas, on peut contrôler le débit de distillation à l'aide de la température du fluide caloporteur ou encore en proportionnant la quantité de chaleur mise en œuvre.

En effet, les solvants traités peuvent présenter des chaleurs spécifiques différentes mais surtout des chaleurs de vaporisation très différentes (ex. de 60 à 200 kcal (de $60 \times 4.184$ à $200 \times 4.184$ J par kg) et des températures d'ébullition très différentes (ex. 40 à 220 °C).

Les mélanges à traiter peuvent couvrir toutes ces valeurs simultanément.

Le solvant régénéré s'écoule enfin dans un receveur (21) d'où une pompe d'extraction (22) dirige le solvant régénéré vers des décanteurs ou d'autres appareils de traitement ou de stockage.

La pompe d'extraction (22) est asservie avantageusement par des contacts de niveau haut et bas (23) disposés dans le receveur (21).

Une première décantation et séparation d'eau éventuelle peut être opérée dans ce receveur à l'aide d'une vanne (24).

On peut aussi recycler le gaz inerte utilisé dans l'installation en le comprimant dans un réservoir (14) placé en sortie de la pompe à vide (12) de manière à économiser celui-ci.

Le gaz comprimé dans le réservoir (14) peut être réintroduit dans l'installation à l'aide d'un by-pass (29) équipé d'un robinet (26).

Le procédé est applicable également à toutes compositions liquides et solides séparables par distillation. Par exemple les mélanges eau/huile solubles etc... ainsi qu'aux concentrations de déchets à base aqueuse avec solidification de ces déchets.

Une autre particularité du procédé consiste en vue de solidifier le résidu et de le rendre soit insoluble à l'eau et inattaquable par les bactéries rencontrées dans le sol, à ajouter à un moment quelconque de l'opération, soit une résine polymérisable par la chaleur de préférence ou autre procédé qui solidifiera le résidu et enrobera le déchet polluant de matière insoluble et inattaquable par les bactéries en particulier les résines du type formo-phénoliques réputées pour leur qualité dite alimentaire soit encore une poudre à fort pouvoir absorbant ou gélifiant tel l'argile, les bentonites, les silices microscopiques, etc...

Un autre avantage du procédé consiste en vue de liquéfier le résidu à introduire ou non dans le résidu traité un composé, et d'élever ou d'abaisser la température pour obtenir par réaction chimique ou par dissolution la liquéfaction du résidu.

Tel est le cas entre autre de certaines résines gélifiées qui par transestérification avec des acides gras ou des huiles à faible degré de polymérisation conduisent à de nouveaux composés stables liquides ou solubles et récupérables comme sous-produit.

Cette opération est possible en raison de l'existence de l'agitation et de la forme spéciale de l'agitateur qui permet de réduire la dimension des particules à traiter.

**Revendications**

1. Installation de régénération de solvants usés, du type comportant un évaporateur (1) chauffé et refroidi par fluide caloporteur (45, 46) avec dispositif de réglage de la température et de la pression, comprenant la combinaison des éléments suivants:

a) une paroi d'échange thermique (2) alimentée par le fluide caloporteur, paroi de forme conique dirigée pointe en bas et disposée au moins à la partie inférieure de l'évaporateur (1);

b) un agitateur (6) à vitesse variable et à deux sens de rotation, ledit agitateur étant disposé dans l'évaporateur (1) et étant équipé de bras porteurs de guirlandes de chaînes (7) dont les maillons sont prévus avec des arêtes tranchantes à angles aigus et réalisées en métal anti-étincelle, lesdites chaînes étant suspendues à deux bras adjacents de l'agitateur (6) et à des hauteurs différentes en étant convergentes vers le centre du fond de l'évaporateur et en permettant ainsi un mouvement de force centripète aux produits pour un sens de rotation de l'agitateur.

c) un circuit de condensation (9, 10) réalisé par des colonnes réfrigérantes;

d) un dispositif brise-mousse, notamment du type peigne (68, 69) disposé dans l'évaporateur;

e) un dispositif (41) d'injection de gaz dans l'évaporateur avec réservoir (14) de recyclage des gaz;

f) un dispositif (62, 63) d'injection du solvant usé à traiter au sein de la masse liquide (30), par passage dans un échangeur (66), tel qu'un serpentin plongé dans ladite masse liquide (30) et dont le niveau est stabilisé par régulateur (64, 65).

2. Installation selon la revendication 1 ci-dessus, caractérisée en outre en ce que les chaînes sont suspendues en haut à un bras et en bas au bras adjacent, et comportent des anneaux additionnels passés dans les maillons des chaînes (7) et le fond de l'évaporateur comporte une trappe (8) d'évacuation.

3. Installation selon la revendication 1, caractérisée en outre en ce que le circuit de condensation comporte des colonnes réfrigérantes sensiblement verticales (9) et des colonnes inclinées vers le bas (10).

4. Dispositif selon la revendication 1 ci-dessus, caractérisé en outre en ce qu'elle comporte un circuit d'évacuation des gaz (15, 61).

5. Dispositif selon la revendication 1 ci-dessus, caractérisé en ce que le dispositif brise-mousse est constitué d'un bras horizontal (68) calé en haut de l'arbre de commande de l'agitateur et auquel sont suspendues des tiges verticales (69).

6. Installation selon la revendication 1 ci-dessus, caractérisée en ce qu'elle comporte un dispositif de régulation de la température de chauffage de l'évaporateur asservi à un dispositif de contrôle du débit du liquide condensé.

7. Installation selon la revendication 6, caractérisée en ce que le dispositif d'asservissement de la température de chauffage au débit du liquide condensé est constitué d'un flotteur à pointeau (16) sensible au débit du liquide condensé; ledit flotteur étant apte à commander par une vanne proportionnelle (17) la pression d'air comprimé sur un circuit aboutissant à une vanne (18) micrométrique commandant le circuit de fluide chauffant et apte à réguler le débit et la température du fluide caloporteur desservant l'évaporateur (1).

8. Utilisation d'une installation conforme à l'une des revendications 1 à 7 précédentes en vue de la régénération de solvants usés, caractérisée par la succession des opérations suivantes:

a) on introduit le solvant usé dans l'évaporateur chauffé, sous ambiance de gaz inerte;

b) on complète l'alimentation du solvant à traiter avec pré-chauffage par passage du solvant introduit dans un circuit d'alimentation (66) immergé dans la masse du solvant (30) en cours de traitement;

c) on procède au nettoyage des parois d'échange de l'évaporateur par raclage au moyen des chaînes (7) avec modifications successives de la vitesse de rotation de l'agitateur (6) et inversion alternée des sens de rotation;

d) on poursuit la distillation des solvants dans des conditions de température, pression et débit convenable et adaptées à la nature des solvants et de leurs résidus de façon à éviter leur décomposition, les vapeurs étant condensées et recueillies à la sortie des colonnes (9, 10).

e) on procède à la dessication du résidu sous vide, les vapeurs émises dans cette phase finale étant recueillies par un circuit séparé (15, 61);

f) on procède à l'extraction du résidu sec par la trappe d'évacuation (8) située à la base de l'évaporateur par rotation inversée de l'agitateur à chaînes (6).

9. Utilisation selon la revendication 8 qui précède, caractérisée en outre en ce que l'on procède, lors de la phase finale de dessication sous vide, à l'introduction dans l'évaporateur de produits d'addition aptes à modifier l'état physique du résidu pour en faciliter l'extraction, ces produits d'addition étant choisis parmi les produits comportant les charges minérales sous forme de poudre à fort pouvoir absorbant tel que l'argile, les bentonites, les silices microscopiques, et les résines polymérisables aptes à solidifier et enrober le résidu solide.

## Claims

1. Installation for regeneration of waste solvents, of the type comprising an evaporator (1) heated and cooled by heat-transfer fluid (45, 46) with device for adjusting the temperature and pressure, comprising the combination of the following elements:

a) a heat-exchange wall (2) supplied with the heat-transfer fluid, wall of conical shape with the point directed downwardly and disposed at least in the lower part of the evaporator (1);

b) a stirrer (6) with variable speed and two directions of rotation, said stirrer being disposed in the evaporator (1) and being equipped with arms bearing garlands of chains (7) of which the links are provided with cutting edges with acute angles and made of anti-spark metal, said chains being suspended from two adjacent arms of the stirrer (6) and at different heights and being convergent towards the centre of the bottom of the evaporator and thus allowing a movement of centripetal force for the products for one direction of rotation of the stirrer;

c) a condensation circuit (9, 10) formed by cooling columns;

d) a foam-breaker device, particularly of the comb type (68, 69) disposed in the evaporator;

e) a device (41) for injection of gases into the evaporator with reservoir (14) for recycling the gases;

f) a device (62, 63) for injection of waste solvent to be treated within the liquid mass (30), by passage in an exchanger (66), such as a pipe coil immersed in said liquid mass (30) and of which the level is stabilized by regulator (64, 65).

2. Installation according to Claim 1 hereinabove, characterized in addition in that the chains are suspended at the top from one arm and at the bottom from the adjacent arm, and comprise additional rings passed in the links of chains (7) and the bottom of the evaporator comprises an evacuation trapdoor (8).

3. Installation according to Claim 1, characterized in addition in that the condensation circuit comprises substantially vertical cooling columns (9) and downwardly inclined columns (10).

4. Device according to Claim 1 hereinabove, characterized in addition in that it comprises a circuit for evacuating the gases (15, 61).

5. Device according to Claim 1 hereinabove, characterized in that the foam-breaker device is constituted by a horizontal arm (68) fixed at the top of the control shaft of the stirrer and from which vertical rods (69) are suspended.

6. Installation according to Claim 1 hereinabove, characterized in that it comprises a device for regulating the temperature of heating of the evaporator controlled by a device for monitoring the flowrate of the condensed liquid.

7. Installation according to Claim 6, characterized in that the device for controlling the temperature of heating by the flowrate of the condensed liquid is constituted by a needle float (16) sensitive to the flowrate of the condensed liquid; said float being adapted to control by a proportional valve (17) the compressed air pressure on a circuit terminating at a micrometric valve (18) controlling the circuit of heating fluid and adapted to regulate the flowrate and temperature of the heat-transfer fluid serving the evaporator (1).

8. Use of an installation according to one of preceding Claims 1 to 7, with a view to the regeneration of waste solvents, characterized by the succession of the following operations:

a) introducing the waste solvent into the heated evaporator, under an inert gas environment;

b) completing supply of the solvent to be treated with pre-heating by passage of the solvent introduced into a supply circuit (66) immersed in the mass of the solvent (30) in the course of treatment;

c) proceeding with cleaning of the exchange walls of the evaporator by scraping by means of the chains (7) with successive modifications of the speed of rotation of the stirrer (6) and alternate reversal of the directions of rotation;

d) continuing distillation of the solvents under suitable conditions of temperature, pressure and flowrate and adapted to the nature of the solvents and their residues so as to avoid decomposition thereof, the vapours being condensed and collected at the outlet of the columns (9, 10);

e) proceeding with the drying of the residue in vacuo, the vapours emitted in this final phase being collected by a separate circuit (15, 61);

f) proceeding with the extraction of the dry residue by the evacuation trapdoor (8) located at the base of the evaporator by reversed rotation of the stirrer (6) with chains.

9. Use according to preceding Claim 8, characterized in addition in that, during the final phase of drying in vacuo, one proceeds with the introduction into the evaporator of addition products adapted to modify the physical state of the residue in order to facilitate extraction thereof, these addition products being selected from the products comprising the mineral fillers in the form of powder with strong absorbent power such as clay, bentonites, microscopic silicas, and the polymerizable resins adapted to solidify and coat the solid residue.

## Patentansprüche

1. Regenerierungsanlage für gebrauchte Lösemittel mit einem Verdampfer (1), der von einer Wärmeübertragungsflüssigkeit (45, 46) mit einer Temperatur- und Druckregelungsvorrichtung erwärmt und gekühlt wird, gekennzeichnet durch:

a) eine von der Wärmeübertragungsflüssigkeit gespeiste Wärmeaustauschwand (2), die konisch ausgebildet, mit der Spitze nach unten gerichtet und zumindest am unteren Teil des Verdampfers (1) angeordnet ist;

b) einen mit wechselnder Drehzahl in beiden Drehrichtungen betriebener Rührer (6), der im Verdampfer (1) angeordnet ist und Girlandentragkettenarme (7) aufweist, deren Kettenglieder mit spitzwinkeligen Schneidkanten aus funkensicherem Metall gefertigt sind, wobei die Ketten an zwei neben dem Rührer (6) liegenden Armen in unterschiedlicher Höhe aufgehängt sind und zur Bodenmitte des Verdampfers hin konvergieren, so dass den Stoffen in einer Drehrichtung des Rührers eine Bewegung von zentripetaler Kraft erteilt werden kann;

c) einen aus Kühlsäulen gebildeter Kondensationskreis (9, 10);

d) eine schaumbrechende Vorrichtung, die insbesondere als Kamm (68, 69) ausgebildet und im Verdampfer eingesetzt ist;

e) eine Vorrichtung (41) zum Eintreiben von Gas in den Verdampfer mit einem Umlaufgasreservoir (14);

f) eine Vorrichtung (62, 63) zum Einspritzen des gebrauchten und innerhalb der Flüssigmasse (30) durch Hindurchführen in einem Austauscher (66) zu behandelnden Lösemittels, der beispielshalber als Rohrschlange ausgebildet ist, die in die Flüssigkeitsmasse (30) eintaucht und deren Höhe durch einen Regler (64, 65) stabilisiert wird.

2. Anlage nach Anspruch 1, dadurch gekennzeichnet, dass die Ketten oben an einem Arm und unten am benachbarten Arm herabhängend aufgehängt sind und in die Kettenglieder (7) eingeführte Zusatzringe aufweisen, und dass am Boden des Verdampfers eine Abzugsklappe (8) vorgesehen ist.

3. Anlage nach Anspruch 1, dadurch gekennzeichnet, dass der Kondensationskreis allgemein vertikal verlaufende Kühlsäulen (9) sowie nach unten geneigte Säulen (10) besitzt.

4. Vorrichtung nach Anspruch 1, gekennzeichnet durch einen Gasabzugskreis (15, 61).

5. Vorrichtung nach Anspruch 1, dadurch gekennzeichnet, dass die schaumbrechende Vorrichtung aus einem horizontalen Arm (68) besteht, der oben an der Steuerwelle des Rührers festgekeilt ist und von dem senkrechte Stäbe (69) herabhängen.

6. Anlage nach Anspruch 1, gekennzeichnet durch eine Vorrichtung zum Regeln der Aufwärmtemperatur des Verdampfers, die von einer Vorrichtung zur Durchsatzkontrolle der kondensierten Flüssigkeit gesteuert wird.

7. Anlage nach Anspruch 6, dadurch gekennzeichnet, dass die den Durchsatz der kondensierten Flüssigkeit steuernde Temperaturaufwärmregelung einen allgemein auf den Durchsatz der kondensierten Flüssigkeit ansprechenden Schwimmer (16) aufweist, durch den mittels eines Proportionalventils (17) der Druck der Druckluft an einem Kreis gesteuert werden kann, der in einem Mikrometerventil (18) ausläuft, das den Kreis der aufwärmenden Flüssigkeit steuert und so beschaffen ist, dass es den Durchsatz und die Temperatur der den Verdampfer (1) versorgenden Wärmeübertragungsflüssigkeit regelt.

8. Verwendung der Anlage nach einem der vorstehenden Ansprüche 1 bis 7 im Hinblick auf die Regenerierung gebrauchter Lösemittel, gekennzeichnet durch nachstehende Arbeitsgänge:

a) Einleiten des gebrauchten Lösemittels in den aufgewärmten Verdampfer in einem Edelgasmilieu;

b) Vollständige Durchführung der Einspeisung des zu behandelnden Lösemittels bei Vorerwärmung, indem das in den Speisekreis (66) eingeführte Lösemittel durchgeleitet wird, der in der in Bearbeitung befindlichen Lösemittelmasse (30) eingetaucht ist;

c) Reinigen der Austauschwände des Verdampfers durch Krählarbeit mit Hilfe der Ketten (7) bei aufeinander folgendem Verändern der Drehzahl des Rührers (6) und bei wechselnder Umkehrung der Drehrichtung;

d) Weiterführung der Destillation der Lösemittel unter Temperatur-, Druck- und Durchsatzbedingungen, die auf die Eigenart der Lösemittel und deren Rückstände abgestimmt und diesen angepasst sind, so dass seine Zer- oder Umsetzung vermieden wird, wobei die Dämpfe am Säulenausgang (9, 10) kondensiert und gesammelt werden;

e) Einleiten des Trocknens des Rückstands unter Vakuum, wobei die abgegebenen Dämpfe dieser Endphase von einem getrennten Kreis (15, 61) gesammelt werden und durch

f) Extrahieren des trockenen Rückstandes durch die an der Basis des Verdampfers liegenden Abzugsklappe (8) durch Umkehrung der Drehung des kettenbestückten Rührers (6).

9. Anwendungsverfahren der Anlage nach Anspruch 8, dadurch gekennzeichnet, dass im weiteren Verlauf während der unter Vakuum stattfindenden Endphase der Trocknens Zusatzstoffe in den Verdampfer eingeführt werden, die so beschaffen sind, dass sie zur Erleichterung des Extrahierens den Aggregatzustand des Rückstandes verändern, wobei als Zusatzstoffe solche Stoffe gewählt werden, die mineralische Füllstoffe in Pulverform mit starker Absorptionskraft wie Ton, Bentonit, mikroskopische Kieselerde sowie polymerisierbare Harze aufweisen, die sich verfestigen und den festen Rückstand einschliessen können.

*Fig.1*

0 030 200

Fig. 2

Fig. 3

Fig. 5

Fig. 4

Fig. 6